# EUROPÄISCHE PATENTSCHRIFT

(11) **EP 3 133 917 B1**
(45) Veröffentlichungstag und Bekanntmachung des Hinweises auf die Patenterteilung: **31.10.2018**
(21) Anmeldenummer: 15724172.0
(22) Anmeldetag: 23.04.2015
(51) Int. Cl.: A01N 25/10, A01N 25/24, A01N 25/32, A01N 41/10, A01N 25/04, A01N 25/30, A01N 37/40, A01N 39/04, A01N 57/20

(54) **VERWENDUNG VON WÄSSRIGEN DRIFTREDUZIERENDEN ZUSAMMENSETZUNGEN**
USE OF AQUEOUS DRIFTREDUCING COMPOSITIONS
UTILISATION DES COMPOSITIONS AQUEUSE RÉDUISANTE LA DÉRIVE

(30) Priorität: 23.04.2014 DE 102014005771
(43) Veröffentlichungstag der Anmeldung: 01.03.2017
(73) Patentinhaber: Clariant International Ltd, 4132 Muttenz (CH)
(72) Erfinder: BAUR, Peter, 86938 Schondorf (DE); BAUER, Martin, 60329 Frankfurt am Main (DE); GIESSLER, Stephanie, 60529 Frankfurt am Main (DE); STAIGER, Siegfried, 65929 Frankfurt am Main (DE)
(74) Vertreter: Paczkowski, Marcus
(86) Internationale Anmeldenummer: PCT/EP2015/000838
(87) Internationale Veröffentlichungsnummer: WO 2015/161923

(56) Entgegenhaltungen:
- DE-A1- 10 117 993
- "SYNERGEN OS | Innovation Spotlight Innovation Spotlight", , 1. September 2013 (2013-09-01), XP055203796, Gefunden im Internet: URL:http://www.clariant.de/C12575E4001FB2B 8/vwLookupImagesforLoad/CLA_InnoSpot_Syner gen_EN_3.pdf/$FILE/CLA_InnoSpot_Synergen_E N_3.pdf [gefunden am 2015-07-21]

## Beschreibung

Die Erfindung betrifft die Verwendung von Zusammensetzungen enthaltend bestimmte Copolymere und Wasser zur Verminderung des Drifts bei der Applikation einer Spritzbühe enthaltend ein oder mehrere Pestizide und ein Verfahren zur Verminderung des Drifts bei der Applikation von Spritzbrühen enthaltend ein oder mehrere Pestizide.

Pflanzenschutzmittel werden in sehr effizienter Weise unter Einsatz von Sprühtanks in Flugzeugen, Traktoren oder anderen Vorrichtungen auf landwirtschaftliche Produktionsfelder aufgebracht. Um eine möglichst genaue Platzierung der Wirksubstanzen zu erreichen, ist es erforderlich, einen möglichst engen Sprühkegel zu erhalten und ein Abdriften des Sprühnebels aus dem Zielort heraus zu vermeiden.

Der Drift des Sprühkegels wird im Wesentlichen durch die Tröpfchengrößenverteilung bestimmt. Je kleiner die Tröpfchen, umso länger die Verweilzeit in der Luft und umso größer die Tendenz zu verdampfen und/oder horizontal abzudriften und den Zielort zu verfehlen. Aus der Literatur ist bekannt, dass der Feintropfenanteil < 150 µm (Teske et al., 2004, The Role of Small Droplets in Classifying Drop Size Distributions, ILASS Americas 17th Annual Conference, Arlington VA), insbesondere < 100 µm (Vermeer et al., Proc. ISAA 2013, The use of adjvanted formulations for drift control), den Anteil der Tröpfchen im Sprühkegel bestimmt, der zum Drift-Effekt beiträgt. Die Reduktion des Feintropfenanteils im Sprühnebel ist daher entscheidend für eine Reduktion des Drifts und wird daher benutzt, die Drifteigenschaften einer Zusammensetzung zu bestimmen.

Eine deutliche Minimierung des Drift-Effektes kann durch Zusatz geeigneter "drift control Agentien" zu Pestizid-Formulierungen erreicht werden, die eine Vergrößerung der Tröpfchen im Sprühnebel bewirken. Die mit "drift control Agentien" modifizierten Formulierungen müssen darüber hinaus gegenüber den Scherkräften, denen sie in den Sprühpumpen und -düsen ausgesetzt sind, unempfindlich sein. Gute biologische Abbaubarkeit, Kompatibilität mit anderen Bestandteilen der Pflanzenschutzmittel, sowie eine hohe Lagerstabilität und Temperaturstabilität sind weitere Anforderungen an "drift control Agentien". Es ist bekannt, dass die Rheologie wässriger Mittel durch Zusatz wasserlöslicher Polymere, beispielsweise Polyacrylamide, Acrylamid / Acrylsäurepolymere, Natriumpolyacrylat, Carboxymethylcellulose, Hydroxyethylcellulose, Methylcellulose, Polysaccharide, natürlicher und synthetischer guar gum (US 4,413,087, US 4,505,827, US 5,874,096) modifiziert werden kann.
Polymere aus Acrylamido-2-methyl-propansulfonsäure und Acrylamid und deren Verwendung als driftreduzierende Adjuvantien sind aus der WO 2001/060877 bekannt.

Bekannt ist auch ein Copolymer bestehend aus Glycerin, Dicarbonsäure und einer Monocarbonsäure und deren Verwendung zur Verbesserung der biologischen Aktivität von Pestiziden (siehe DE10117993).

Darüber hinaus ist das Handelsprodukt "Synergen®OS bekannt, das aus einem methyliertem Öl und Polyglycerinester besteht und eine driftreduzierende Wirkung besitzt.

Obwohl mit den bekannten Systemen bereits gute Ergebnisse erzielt werden, ist man aus technischen, ökonomischen und ökologischen Gründen weiterhin bestrebt, geeignete "drift control Agentien" zu finden, die auch unter Praxisbedingungen die Tröpfchenvolumina der wässrigen Mittel effektiv vergrößern und ein Abdriften des Sprühkegels reduzieren.
Überraschenderweise wurde nun gefunden, dass sich Zusammensetzungen enthaltend A) bestimmte Copolymere auf Polyglycerinbasis und B) Wasser als driftreduzierende Zusammensetzungen für Pflanzenschutzmittel eignen und beim Versprühen von Pflanzenschutzmitteln enthaltend derartige Zusammensetzungen eine Vergrößerung der Teilchen und eine Reduktion des Sprühkegels bewirken.
Gegenstand der Erfindung ist daher die Verwendung von Zusammensetzungen enthaltend
A) ein oder mehrere Copolymere, wobei die Copolymere eine oder mehrere Struktureinheiten hervorgegangen aus
   a) 19,9 bis 75,9 Gew.-% Glycerin
   b) 0,1 bis 30 Gew.-% mindestens einer Dicarbonsäure und
   c) 24 bis 80 Gew.-% mindestens einer Monocarbonsäure gemäß Formel (I)

      R¹-COOH (I)

      wobei R¹ (C₅-C₂₉)-Alkyl; (C₇-C₂₉)-Alkenyl; Phenyl oder Naphthyl darstellt, enthalten
   und
B) Wasser
   zur Verminderung des Drifts bei der Applikation einer Spritzbühe enthaltend ein oder mehrere Pestizide.

Im Rahmen der vorliegenden Erfindung werden die erfindungsgemäß verwendeten Zusammensetzungen enthaltend das eine oder die mehreren Copolymere der Komponente A) und Wasser der Komponente B) im Folgenden als "driftreduzierende Zusammensetzung" oder "driftreduzierende Zusammensetzungen" bezeichnet.

Unter "Drift" im Sinne der Erfindung versteht man den Effekt, dass sich beim Versprühen des Pflanzenschutzmittels kleine Tröpfchen bilden, die über die zu behandelnde Fläche hinaus getragen werden können und das Versprühen so weniger effektiv oder sogar schädlich für angrenzende Flächen und Kulturen machen können.

Im Rahmen der vorliegenden Erfindung versteht man unter Driftreduzierung vorzugsweise die Verminderung des Anteils der Feintropfen mit einem Durchmesser < 105 µm im Sprühnebel im Vergleich zur Applikation eines Mittels, welches die driftreduzierende Zusammensetzung nicht enthält, vorzugsweise um mindestens 10 % und besonders bevorzugt um mindestens 25 %.

Unter "Applikation" einer Sprützbrühe enthaltend ein oder mehrere Pestizide im Sinne der Erfindung versteht man das Aufbringen einer wässrigen Spritzbrühe enthaltend ein oder mehrere Pestizide auf die zu behandelnden Pflanzen oder deren Ort.

Vorzugsweise enthalten die driftreduzierenden Zusammensetzungen Wasser in einer Menge größer 1,0 Gew.-%, besonders bevorzugt größer oder gleich 2 Gew.-%, insbesondere bevorzugt größer oder gleich 5 Gew.-% und außerordentlich bevorzugt größer oder gleich 10 Gew.-%, jeweils bezogen auf das Gesamtgewicht der driftreduzierenden Zusammensetzung.

In der Copolymer-Komponente A) beziehen sich die genannten Anteile der Monomere a), b) und c) (in Gew.-%) auf die Gesamtmenge der Monomere wie sie zur Herstellung der Copolymere eingesetzt wurden. Sie beziehen sich nicht auf die Endzusammensetzung der Copolymere, die durch Abspaltung von bei der Kondensation freiwerdendem Wasser geringfügig davon abweicht.

Die grundsätzlich möglichen Zusammensetzungen der Copolymere, sowie Herstellung und Ausführungsformen der Copolymerisation sind in EP 1 379 129 beschrieben. Allen gemein ist, dass die Kondensationsreaktionen zwischen Alkoholen und/oder Carbonsäuren ablaufen, d. h. die Monomere durch Etherbindungen (im Falle der Kondensation von zwei Alkohol-Funktionen des Glycerins) bzw. durch Esterbindungen (im Falle der Kondensation einer Alkohol-Funktion des Glycerins mit einer Carbonsäure-Funktion der Mono- oder Dicarbonsäure) miteinander verbunden sind.

Die Copolymere A) werden vorzugsweise derart hergestellt, dass Monoglycerin zunächst zu einem Oligo- oder Polyglycerin kondensiert wird und erst danach mit der mindestens einen Dicarbonsäure b) und der mindestens einen Monocarbonsäure c) umgesetzt wird. Dies bewirkt, dass die Copolymere A) in dieser bevorzugten Ausführungsform der Erfindung kondensierte Oligo- oder Polyglycerin-Einheiten enthalten.

Bei der mindestens einen Dicarbonsäure b) handelt es sich vorzugsweise um Oxalsäure, eine Dicarbonsäure gemäß Formel (II)

HOOC-R²-COOH (II)

und/oder eine Dicarbonsäure gemäß Formel (III) 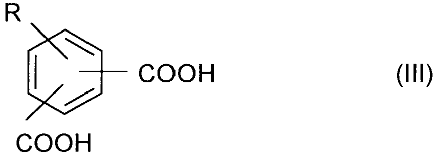 wobei R² eine (C₁-C₄₀)-Alkylen-Brücke, eine (C₂-C₂₀)-Alkenylen-Brücke oder eine mono- oder di-hydroxy-substituierte (C₂-C₂₀)-Alkylen-Brücke darstellt und R H, (C₁-C₂₀)-Alkyl, (C₂-C₂₀)-Alkenyl, Phenyl, Benzyl, Halogen, -NO₂, (C₁-C₆)-Alkoxy, -CHO oder -CO((C₁-C₆)-Alkyl) darstellt.

Besonders bevorzugt handelt es sich bei der mindestens einen Dicarbonsäure b) um Phthalsäure, Itaconsäure, Weinsäure, Bernsteinsäure, Äpfelsäure und/oder Adipinsäure.

Bei der mindestens einen Monocarbonsäure c) handelt es sich vorzugsweise um eine oder mehrere Fettsäuren mit 8 bis 24, vorzugsweise 12 bis 22, Kohlenstoffatomen, besonders bevorzugt um eine oder mehrere gesättigte und / oder ungesättigte Fettsäuren ausgewählt aus der Gruppe bestehend aus Caprylsäure, Caprinsäure, Laurinsäure, Miristinsäure, Palmitinsäure, Stearinsäure, Arachinsäure, Behensäure, Palmitoelinsäure, Ölsäure, Linolsäure und Mischungen aus derartigen Fettsäuren wie z. B. Talgfettsäuren und Cocosfettsäuren.

Besonders bevorzugt handelt es sich bei der mindestens einen Dicarbonsäure b) um Phthalsäure und bei der mindestens einen Monocarbonsäure c) um eine Cocosfettsäure.

Insbesondere bevorzugt basieren die Copolymere A) auf 34,0 bis 62,0 Gew.-% Glycerin, 0,2 bis 21,0 Gew.-% Phthalsäure und 24,0 bis 54,0 Gew.-% Cocosfettsäure.

Der mittlere Kondensationsgrad des Glycerins in dem einen oder den mehreren Copolymeren der Komponente A) liegt bevorzugt zwischen 4 und 10.

Außerordentlich bevorzugt sind die im Beispielteil aufgeführten Copolymere 1 bis 7.

Vorzugsweise besteht das eine oder bestehen die mehreren Copolymere A) aus den Komponenten a), b) und c).

Der Großteil der Rohstoffe, die für die Herstellung der Copolymere benötigt werden, stammt aus nachwachsenden Rohstoffquellen. Glycerin ist heutzutage ein Nebenprodukt der Biodieselherstellung und die Monocarbonsäuren werden aus tierischen oder pflanzlichen Fetten oder Ölen gewonnen. Lediglich die Dicarbonsäure ist üblicherweise synthetischen Ursprungs.

In einer bevorzugten Ausführungsform der Erfindung beträgt der Anteil des einen oder der mehreren Copolymere der Komponente A) in den driftreduzierenden Zusammensetzungen vorzugsweise 1 bis 90 Gew.-%, besonders bevorzugt 10 bis 80 Gew.-% und insbesondere bevorzugt 20 bis 70 Gew.-% und der Anteil der Komponente B) vorzugsweise 10 bis 99 Gew.-%, besonders bevorzugt 20 bis 90 Gew.-% und insbesondere bevorzugt 30 bis 80 Gew.-%, jeweils bezogen auf das Gesamtgewicht der driftreduzierenden Zusammensetzungen.

Neben dem einen oder den mehreren Copolymeren der Komponente A) und Wasser B) können die driftreduzierenden Zusammensetzungen ein oder mehrere Hilfs- und Zusatzstoffe enthalten.

In einer bevorzugten Ausführungsform der Erfindung enthalten die driftreduzierenden Zusammensetzungen daher ein oder mehrere Hilfs- und Zusatzstoffe (Komponente C)).

Das eine oder die mehreren Hilfs- und Zusatzstoffe können in den driftreduzierenden Zusammensetzungen verschiedene Funktionen übernehmen.

In einer besonders bevorzugten Ausführungsform der Erfindung enthalten die driftreduzierenden Zusammensetzungen ein oder mehrere Hilfs- und Zusatzstoffe, wobei diese ausgewählt sind aus der Gruppe bestehend aus Adjuvants, Cosolventien, Emulgatoren, Entschäumern, Harnstoff, Konservierungsmitteln, Lösungsvermittlern, Netzmitteln, Penetrationsförderern, Salzen und Tensiden und vorzugsweise ausgewählt sind aus der Gruppe bestehend aus Adjuvants, Cosolventien, Entschäumern, Harnstoff, Konservierungsmitteln, Salzen und Tensiden.

In einer insbesondere bevorzugten Ausführungsform der Erfindung enthalten die driftreduzierenden Zusammensetzungen ein oder mehrere Hilfs- und Zusatzstoffe, wobei diese ausgewählt sind aus der Gruppe bestehend aus Adjuvants, Entschäumern, Konservierungsmitteln und Tensiden.

In einer weiteren insbesondere bevorzugten Ausführungsform der Erfindung enthalten die driftreduzierenden Zusammensetzungen ein oder mehrere Hilfs- und Zusatzstoffe, wobei diese ausgewählt sind aus der Gruppe bestehend aus Adjuvants, Cosolventien und Salzen, vorzugsweise ausgewählt sind aus der Gruppe bestehend aus Adjuvants und Cosolventien und besonders bevorzugt ausgewählt sind aus Adjuvants.

In einer weiteren insbesondere bevorzugten Ausführungsform der Erfindung enthalten die driftreduzierenden Zusammensetzungen ein oder mehrere Hilfs- und Zusatzstoffe, wobei diese ausgewählt sind aus der Gruppe bestehend aus Harnstoff und Salzen (wie beispielsweise agrochemischen Salzen) und vorzugsweise ausgewählt sind aus Salzen.

Bei den gegebenenfalls in den driftreduzierenden Zusammensetzungen enthaltenen Adjuvants kann es sich um ein einziges Adjuvant oder um ein Gemisch zweier oder mehrerer Adjuvants handeln. Beispiele für Adjuvants sind Fettaminethoxylate, Etheraminethoxylate, Alkylbetaine, Amidoalkylbetaine, Aminoxide, Amidoalkylaminoxide, Phosphorsäureesterderviate, Alkylpolylglycoside und/oder Alkylglucamide. Derartige Adjuvants sind beispielsweise in der WO 2009/029561 beschrieben.

Bei den den gegebenenfalls in den driftreduzierenden Zusammensetzungen enthaltenen Cosolventien kann es sich um ein einziges Lösemittel oder um ein Gemisch zweier oder mehrerer Lösemittel handeln. Dazu eignen sich alle polaren Lösemittel, die mit den driftreduzierenden Zusammensetzungen kompatibel sind und eine homogene Phase bilden, und zwar auch für den Fall, dass die driftreduzierenden Zusammensetzungen ein oder mehrere Pestizide enthalten sollten. Geeignete Cosolventien sind beispielsweise einwertige Alkohole, wie Methanol, Ethanol, Propanole, Butanole, Benzylalkohol oder mehrwertige Alkohole wie Ethylenglykol, Diethylenglykol, Propylenglykol, Dipropylenglykol oder Glycerin oder Polyglykole wie Polyethylenglykol, Polypropylenglykol oder gemischte Polyalkylenglykole (PAGs). Weitere geeignete Lösemittel sind Ether wie beispielsweise Propylenglykolmonomethylether, Propylenglykoldimethylether, Dipropylenglykolmonomethylether oder Dipropylenglykoldimethylether oder Amide wie beispielsweise N-Methylpyrrolidon, N-Ethylpyrrolidon, Milchsäuredimethylamid, Caprylsäuredimethylamid oder Decansäuredimethylamid.

Besonders geeignete Cosolventien sind ein oder mehrwertige Alkohole und insbesondere geeignet sind zwei- oder dreiwertige Alkohole wie Propylenglykol, Dipropylenglykol, Glycerin oder Polyethylenglykol, Polypropylenglykol oder gemischte Polyalkylenglykole (PAGs).

Bei den den gegebenenfalls in den driftreduzierenden Zusammensetzungen enthaltenen Entschäumern kann es sich um einen einzigen Entschäumer oder um ein Gemisch zweier oder mehrerer Entschäumer handeln. Als Entschäumer eignen sich Fettsäurealkylesteralkoxylate, Organopolysiloxane wie Polydimethylsiloxane und deren Gemische mit mikrofeiner, gegebenenfalls silanierter Kieselsäure, Perfluoralkylphosphonate, Perfluoralkylphosphinate, Paraffine, Wachse und Mikrokristallinwachse und deren Gemische mit silanierter Kieselsäure. Vorteilhaft sind auch Gemische verschiedener Schauminhibitoren, beispielsweise solche aus Silikonöl, Paraffinöl und/oder Wachsen.

Bei den den gegebenenfalls in den driftreduzierenden Zusammensetzungen enthaltenen Konservierungsmitteln kann es sich um ein einziges Konservierungsmittel oder um ein Gemisch zweier oder mehrerer Konservierungsmittel handeln. Als Konservierungsmittel können organische Säuren und ihre Ester, beispielsweise Ascorbinsäure, Ascorbinpalmitat, Sorbat, Benzoesäure, Methyl-4-hydroxybenzoat, Propyl-4-hydroxybenzoat, Propionate, Phenol, 2-Phenylphenat, 1,2-Benzisothiazolin-3-on, Formaldehyd, schwefelige Säure und deren Salze eingesetzt werden.

Bei den gegebenenfalls in den driftreduzierenden Zusammensetzungen enthaltenen Salzen kann es sich um ein einziges Salz oder um ein Gemisch zweier oder mehrerer Salze handeln. Vorzugsweise handelt es sich bei den Salzen um agrochemische Salze, besonders bevorzugt um ein oder mehrere Ammoniumsalze. Unter den Ammoniumsalzen sind wiederum Ammoniumsulfat, Ammoniumnitrat, Ammoniumphosphat, Ammoniumthiocyanat und/oder Ammoniumchlorid bevorzugt.

Bei den den gegebenenfalls in den driftreduzierenden Zusammensetzungen enthaltenen Tensiden kann es sich um ein einziges Tensid oder um ein Gemisch zweier oder mehrerer Tenside handeln. Bei den Tensiden kann es sich generell um alle mit der driftreduzierenden Zusammensetzung kompatiblen nichtionischen, amphoteren, kationischen oder anionische Tenside handeln, und zwar auch für den Fall, dass die driftreduzierenden Zusammensetzungen ein oder mehrere Pestizide enthalten sollten.

Beispiele für nicht-ionische Tenside sind EO/PO-Blockcopolymere (EO: Ethylenoxy-Einheit; PO: Propylenoxy-Einheit), Alkoxylate wie beispielsweise Ethoxylate von längerkettigen aliphatischen Alkoholen (z. B. Alkoxylate und speziell Ethoxylate von linearen oder verzweigten C₈ bis C₂₄-Alkoholen) oder von aromatischen Alkoholen (z. B. Alkylphenolalkoxylate wie beispielsweise Alkylphenolethoxylate, Tristyrylphenolalkoxylate wie beispielsweise Tristyrylphenolethoxylate, und Tri-sec-butylphenolethoxylate), Rizinusölethoxylate, Ester von langkettigen Carbonsäuren mit ein- oder mehrwertigen Alkoholen sowie deren Ethoxylierungsprodukte, gegebenenfalls ethoxylierte Sorbitanester, Alkylpolyglycoside, Fettaminethoxylate, längerkettige Etheraminalkoxylate und Glucamide. Geeignete amphotere Tenside sind beispielsweise langkettige Alkyldimethylbetaine, Alkyldimethylaminoxide oder Alkyldimethylaminamidopropylaminoxide. Unter den anionischen Tensiden sind beispielsweise Ethersulfate von ethoxylierten Fettalkoholen, Umsetzungsprodukte von (gegebenenfalls ethoxylierten) langkettigen Alkoholen mit Phosphorsäurederivaten, Salze der Dodecylbenzolsulfonsäure und Sulfosuccinate geeignet. Unter "langkettig" werden lineare oder verzweigte Kohlenwasserstoffketten mit mindestens 6 und maximal 22 Kohlenstoffatomen verstanden.

Die Hilfs- und Zusatzstoffe, beispielsweise die Cosolventien und/oder die Adjuvants, können zusätzlich zur Stabilisierung der driftreduzierenden Zusammensetzung beitragen, indem diese beispielsweise die Kälte- oder Wärmestabilität sowie den Trübungspunkt oder weitere anwendungstechnische Eigenschaften wie die Viskosität positiv beeinflussen.

Die driftreduzierenden Zusammensetzungen beispielsweise enthaltend ein oder mehrere Adjuvants eignen sich z.B. bei der Applikation von Spritzbrühen enthaltend ein oder mehrere Pestizide im Rahmen der erfindungsgemäßen Verwendung auch zur Verbesserung der biologischen Aktivität von Herbiziden, Insektiziden, Fungiziden, Akariziden, Bakteriziden, Molluskiden, Nematiziden und Rodentiziden.

Vorzugsweise enthalten die driftreduzierenden Zusammensetzungen ein oder mehrere Hilfs- und Zusatzstoffe der Komponente C), wobei in den driftreduzierenden Zusammensetzungen
- der Anteil des einen oder der mehreren Copolymere der Komponente A) vorzugsweise 1 bis 89,9 Gew.-%, besonders bevorzugt 2 bis 60 Gew.-% und insbesondere bevorzugt 5 bis 50 Gew.-% beträgt,
- der Anteil der Komponente B) vorzugsweise 2 bis 98,9 Gew.-%, besonders bevorzugt 3 bis 90 Gew.-% und insbesondere bevorzugt 5 bis 80 Gew.-% beträgt und
- der Anteil des einen oder der mehreren Hilfs- und Zusatzstoffe der Komponente C) vorzugsweise 0,1 bis 70 Gew.-%, besonders bevorzugt 1 bis 60 Gew.-% und insbesondere bevorzugt 2 bis 50 Gew.-% beträgt.
Diese Mengenangaben sind jeweils auf das Gesamtgewicht der driftreduzierenden Zusammensetzungen bezogen.

In einer hierunter wiederum bevorzugten Ausführungsform der Erfindung beträgt der Anteil von Wasser (Komponente B)) in den soeben genannten driftreduzierenden Zusammensetzungen enthaltend ein oder mehrere Hilfs- und Zusatzstoffe 10 bis 98,9 Gew.-%, vorzugsweise 20 bis 90 Gew.-% und besonders bevorzugt 30 bis 80 Gew.-%.

In einer weiteren bevorzugten Ausführungsform der Erfindung enthalten die driftreduzierenden Zusammensetzungen ein oder mehrere Pestizide und besonders bevorzugt ein oder mehrere wasserlösliche Pestizide. Diese "driftreduzierenden Zusammensetzungen enthaltend ein oder mehrere Pestizide" sind lagerstabil. Sie besitzen bei der Applikation in der Form von Spritzbrühen ebenfalls driftreduzierende Eigenschaften.

Unter "Pestiziden" werden im Rahmen der vorliegenden Erfindung Akarizide, Bakterizide, Fungizide, Herbizide, Insektizide, Molluskide, Nematizide und Rodentizide sowie Phytohormone, wie Pflanzenwachstumsregulatoren, verstanden. Phytohormone steuern physiologische Reaktionen, wie Wachstum, Blührhythmus, Zellteilung und Samenreifung. Eine Übersicht der relevantesten Pestizide findet sich beispielsweise in "The Pesticide Manual" des British Crop Protection Council, 16th Edition 2012, Editor: C. MacBean. Auf die dort aufgeführten Wirkstoffe wird hiermit ausdrücklich Bezug genommen. Sie gelten durch Zitat als Bestandteil dieser Beschreibung.

Die Pestizide, die in den driftreduzierenden Zusammensetzungen enthaltend ein oder mehrere Pestizide enthalten sein können, werden vorzugsweise ausgewählt aus der Gruppe bestehend aus Fungiziden, Herbiziden, Insektiziden und Pflanzenwachstumsregulatoren. Besonders bevorzugt sind Herbizide.

Unter wasserlöslichen Pestiziden im Sinne der Erfindung sind Pestizide zu verstehen, die bei Raumtemperatur (25 °C) eine Löslichkeit von mehr 50 g/l und vorzugsweise mehr als 100 g/l in Wasser aufweisen.

Bevorzugt enthalten die driftreduzierenden Zusammensetzungen ein oder mehrere wasserlösliche Pestizide, wobei das eine oder die mehreren wasserlöslichen Pestizide ausgewählt sind aus der Gruppe der wasserlöslichen Herbizide und besonders bevorzugt ausgewählt sind aus der Gruppe bestehend aus den wasserlöslichen Säuren und Salzen, vorzugsweise den wasserlöslichen Salzen, von Acifluorfen, Aminopyralid, Amitrol, Asulam, Benazolin, Bentazon, Bialaphos, Bicyclopyron, Bispyribac, Bromacil, Bromoxynil, Chloramben, Clopyralid, 2,4-D, 2,4-DB, Dicamba, Dichlorprop, Difenzoquat, Diquat, Endothal, Fenoxaprop, Flamprop, Flumiclorac, Fluoroglycofen, Fomesafen, Fosamine, Glufosinat, Glyphosat, Imazameth, Imazamethabenz, Imazamox, Imazapic, Imazapyr, Imazaquin, Imazethapyr, MCPA, MCPB, Mecoprop, Octansäure, Paraquat, Pelargonsäure, Picloram, Quizalofop, 2,3,6-TBA und Triclopyr.

Die genaue chemische Zusammensetzung und Struktur all dieser Verbindungen sind bekannt und im Internet nachzusehen unter: http://www.alanwood.net/pesticides/index_cn_frame.html

Besonders bevorzugt ist das eine oder sind die mehreren in den driftreduzierenden Zusammensetzungen enthaltenen wasserlöslichen Pestizide ausgewählt aus der Gruppe bestehend aus den wasserlöslichen Säuren und Salzen, vorzugsweise den wasserlöslichen Salzen, von Bentazon, 2,4-D, Dicamba, Fomesafen, Glufosinat, Glyphosat, MCPA und Paraquat und insbesondere bevorzugt ausgewählt aus den wasserlöslichen Salzen von Dicamba.

Unter den wasserlöslichen Salzen des einen oder der mehreren Pestizide sind insbesondere die Alkali- und Ammoniumsalze und unter diesen wiederum die Kalium-, Ammonium-, Dimethylammonium-, iso-Propylammonium-, Diglykolammonium- und die (2-Hydroxyethyl)trimethylammoniumsalze bevorzugt.

Bei den wasserlöslichen Pestiziden kann es sich auch um eine Kombination von zwei oder von mehreren Pestiziden handeln. Solche Kombinationen sind insbesondere dann von Bedeutung, wenn es beispielsweise darum geht, das Wirkungsspektrum einer Zusammensetzung enthaltend ein oder mehrere Pestizide zu verbreitern oder Resistenzen gegenüber bestimmten Pestiziden besser zu unterbinden.

In einer weiteren Ausführungsform der Erfindung enthalten die driftreduzierenden Zusammensetzungen daher mindestens zwei wasserlösliche Pestizide.

Bevorzugt sind die mindestens zwei wasserlöslichen Pestizide ausgewählt aus der Gruppe bestehend aus den wasserlöslichen Säuren und Salzen, vorzugsweise den wasserlöslichen Salzen, von 2,4-D, Dicamba, Fomesafen, Glufosinat und Glyphosat.

Besonders bevorzugte driftreduzierende Zusammensetzungen sind dabei solche, bei denen es sich bei den mindestens zwei wasserlöslichen Pestiziden um die Kombinationen von wasserlöslichen Säuren und/oder Salzen, vorzugsweise von wasserlöslichen Salzen, der zwei Herbizide
a) Glyphosat und 2,4-D oder
b) Glyphosat und Dicamba oder
c) Glyphosat und Fomesafen oder
d) Glyphosat und Glufosinat oder
e) 2,4-D und Dicamba oder
f) Glufosinat und 2,4-D oder
g) Glufosinat und Dicamba handelt.

In einer bevorzugten Ausführungsforn der Erfindung enthalten die driftreduzierenden Zusammensetzungen ein oder mehrere Pestizide, besonders bevorzugt ein oder mehrere wasserlösliche Pestizide, und ein oder mehrere Safener. Die Safener sind in diesen Zusammensetzungen vorzugsweise dispergiert. Der eine oder die mehreren Safener werden vorzugsweise ausgewählt aus der Gruppe bestehend aus Cloquintocet-mexyl, Cyprosulfamid, Isoxafenethyl und Mefenpyr-diethyl.

Pestizide werden üblicherweise in Form von flüssigen oder festen konzentrierten Zubereitungen (Formulierungen) in der Landwirtschaft eingesetzt. Diese erleichtern dem Anwender so die Handhabung oder sorgen für eine höhere Wirksamkeit des Wirkstoffs. Die Formulierungen werden üblicherweise vor dem Einsatz mit Wasser verdünnt und anschließend durch Sprühapplikation ausgebracht. Die Aufwandmenge bei der Sprühapplikation beträgt vorzugsweise 10 - 500 l/ha und besonders bevorzugt 50 - 150 l/ha.

Eine wichtige Form der Pestizidzubereitungen sind wasserlösliche Konzentrate (Soluble Liquids, abgekürzt mit SL). Sie spielen insbesondere bei Herbiziden eine große Rolle, wobei es sich bei diesen beispielsweise um 2,4-D, Dicamba, Glufosinat und/oder Glyphosat handelt, und die oftmals als wasserlösliche Salze, die durch Neutralisation der Säureform dieser Herbizide mit geeigneten Basen in ihre Alkali- oder Ammoniumsalze überführt werden, eingesetzt werden.

In einer bevorzugten Ausführungsform der Erfindung liegen die driftreduzierenden Zusammensetzungen enthaltend ein oder mehrere Pestizide in der Form von Soluble Liquids vor.

Bei der Formulierung von wässrigen Pestizid-Zusammensetzungen ist man bestrebt, die Zusammensetzung mit einer möglichst hohen Konzentration an Wirkstoff zu beladen. Das reduziert Verpackungs-, Transport-, Lager- und Entsorgungskosten. Daher sollte eine Adjuvant-Zusammensetzung in der Lage sein, stabile hochbeladene Pestizid-Zusammensetzungen, sogenannte "High-Load-Formulierungen", zu ermöglichen. Dies gelingt mit den driftreduzierenden Zusammensetzungen überraschend gut.

In einer bevorzugten Ausführungsform der Erfindung enthalten die driftreduzierenden Zusammensetzungen ein oder mehrere wasserlösliche Pestizide und ist die Gesamtmenge des einen oder der mehreren wasserlöslichen Pestizide in den driftreduzierenden Zusammensetzungen größer als 100 g/l, bevorzugt größer als 200 g/l, besonders bevorzugt größer als 300 g/l und insbesondere bevorzugt größer als 400 g/l. Diese Mengenangaben beziehen sich auf das Gesamtvolumen der driftreduzierenden Zusammensetzungen.

In einer weiteren bevorzugten Ausführungsform der Erfindung ist die Gesamtmenge des einen oder der mehreren Copolymere der Komponente A) in den driftreduzierenden Zusammensetzungen von 10 bis 250 g/l, bevorzugt von 40 bis 200 g/l und besonders bevorzugt von 50 bis 150 g/l. Diese Mengenangaben beziehen sich auf das Gesamtvolumen der driftreduzierenden Zusammensetzungen, und vorzugsweise der driftreduzierenden Zusammensetzungen enthaltend ein oder mehrere Pestizide.

Ein besonders wichtiges Kriterium für die Lagerstabilität von wässrigen Pestizid-Zusammensetzungen wie beispielsweise 2,4-D-, Dicamba-, Glufosinat und/oder Glyphosat-Formulierungen, ist die Phasenstabilität. Eine Zusammensetzung wird dann als ausreichend phasenstabil angesehen, wenn sie über einen weiten Temperaturbereich homogen bleibt und wenn es nicht zur Ausbildung von zwei oder mehreren getrennten Phasen oder zu Ausfällungen (Bildung einer weiteren festen Phase) kommt. Phasenstabilität ist sowohl bei erhöhter Temperatur, wie sie beispielsweise bei der Lagerung in der Sonne oder in warmen Ländern auftreten kann, als auch bei niedriger Temperatur, wie beispielsweise im Winter oder in kalten klimatischen Regionen, die entscheidende Voraussetzung für eine lagerstabile Formulierung.

Wie bereits oben geschildert sind Soluble Liquids (SL-Formulierungen) eine wichtige Form von Pestizidzubereitungen.

Ein wichtiges Kriterium für die Lagerstabilität von SL-Formulierungen ist deren Phasenstabilität. Dabei ist vor allem der Temperaturbereich, in dem eine SL-Formulierung phasenstabil ist, von Bedeutung. Die obere Grenze der Phasenstabilität ist der sogenannte Trübungspunkt. Es handelt sich hierbei um die Temperatur, bis zu der eine wässrige Formulierung ohne Phasentrennung erwärmt werden kann. Bis zum Erreichen des Trübungspunktes liegen die SL-Formulierungen als klare homogene Lösungen vor. Beim Erwärmen auf Temperaturen oberhalb des Trübungspunktes trübt die zuvor transparente Formulierung zunächst ein, die nicht mehr löslichen Komponenten trennen sich von der Lösung und beim Stehen lassen kommt es zur Phasenseparation.

Der Trübungspunkt einer Zusammensetzung wird typischerweise bestimmt, indem man die Lösung bis zum Auftreten einer Trübung erwärmt. Im Anschluss daran lässt man die Zusammensetzung unter Rühren und stetiger Temperaturkontrolle abkühlen. Die Temperatur, bei der die eingetrübte Lösung wieder aufklart, wird als Messwert des Trübungspunkts dokumentiert.

Die untere Grenze der Phasenstabilität ist vor allem bei Lagerung in der Kälte, wie zum Beispiel im Winter von Bedeutung. Auch beim Unterschreiten der unteren Grenze der Phasenstabilität kann es zur Phasenseparation oder zu Ausfällungen oder Auskristallisation kommen.

Die driftreduzierenden Zusammensetzungen, vorzugsweise die driftreduzierenden Zusammensetzungen enthaltend ein oder mehrere Pestizide, zeichnen sich dadurch aus, dass sie auch bei einer Temperatur von vorzugsweise größer 55 °C, besonders bevorzugt von größer 70 °C und insbesondere bevorzugt von größer 80 °C, phasenstabil sind.

Außerdem zeichnen sich die driftreduzierenden Zusammensetzungen, vorzugsweise die driftreduzierenden Zusammensetzungen enthaltend ein oder mehrere Pestizide, dadurch aus, dass sie auch bei einer Temperatur von vorzugsweise kleiner 10 °C, besonders bevorzugt von kleiner 0 °C und insbesondere bevorzugt von kleiner -10 °C, phasenstabil sind.

Das eine oder die mehreren Copolymere der Komponente A) haben üblicherweise keinen negativen Einfluss auf die Phasenstabilität der driftreduzierenden Zusammensetzungen enthaltend ein oder mehrere Pestizide oder auf deren Trübungspunkt, und der Trübungspunkt dieser Zusammensetzungen kann beispielsweise durch die Wahl geeigneter Zusatzstoffe der Komponente C) auf das gewünschte Maß eingestellt werden.

Der pH-Wert der driftreduzierenden Zusammensetzungen enthaltend ein oder mehrere Pestizide liegt vorzugsweise im Bereich von 3,5 bis 8,0, besonders bevorzugt bei 4,0 bis 7,0 und insbesondere bevorzugt bei 4,5 bis 6,5 (gemessen als 1 Gew.-%ige wässrige Verdünnung). Der pH-Wert wird primär bestimmt durch die pH-Werte der Lösungen der wässrigen Pestizide, die oftmals als Salze schwacher Säuren vorliegen. Durch Zugabe von Säuren oder Basen kann der pH-Wert auf einen anderen Wert abweichend von dem ursprünglichen pH-Wert der Mischung eingestellt werden.

Die hohe Salzstabilität der driftreduzierenden Zusammensetzungen enthaltend ein oder mehrere Pestizide im wässrigen Medium auch bei hoher Pestizid- und Salzkonzentration stellt einen großen anwendungstechnischen Vorteil dar. Sie ermöglicht es auch, agrochemische Salze wie beispielsweise Dünger mit in die driftreduzierenden Zusammensetzungen aufzunehmen.

In einer weiteren bevorzugten Ausführungsform der Erfindung liegen die driftreduzierenden Zusammensetzungen enthaltend ein oder mehrere Pestizide, vorzugsweise ein oder mehrere wasserlösliche Pestizide, als Konzentrat-Formulierungen vor, die vor dem Gebrauch verdünnt werden, insbesondere mit Wasser (beispielsweise "ready-to-use"-, "in-can"- oder "built-in"-Formulierungen), und enthalten das eine oder die mehreren Pestizide in Mengen von 5 bis 80 Gew.-%, bevorzugt von 10 bis 70 Gew.-% und besonders bevorzugt von 20 bis 60 Gew.-% und das eine oder die mehreren Copolymere der Komponente A) in Mengen von 1 bis 25 Gew.-%, bevorzugt von 2 bis 20 Gew.-% und besonders bevorzugt von 3 bis 15 Gew.-%. Diese Mengenangaben beziehen sich auf das Gesamtgewicht der Konzentrat-Formulierung.

Die driftreduzierenden Zusammensetzungen enthaltend ein oder mehrere Pestizide, vorzugsweise ein oder mehrere wasserlösliche Pestizide, können ein oder mehrere Hilfs- und Zusatzstoffe enthalten. In einer bevorzugten Ausführungsform der Erfindung enthalten die driftreduzierenden Zusammensetzungen daher ein oder mehrere Pestizide, vorzugsweise ein oder mehrere wasserlösliche Pestizide, und ein oder mehrere Hilfs- und Zusatzstoffe. Bei diesen Hilfs- und Zusatzstoffen handelt es sich um die gleichen Hilfs- und Zusatzstoffe, die bereits oben unter Komponente C) beschrieben worden sind und es sind die gleichen Hilfs- und Zusatzstoffe bevorzugt, die bereits oben unter Komponente C) als bevorzugt beschrieben sind.

Der Anteil des einen oder der mehreren Copolymere der Komponente A) in den driftreduzierenden Zusammensetzungen enthaltend ein oder mehrere Pestizide, vorzugsweise ein oder mehrere wasserlösliche Pestizide, und besonders bevorzugt in solchen, enthaltend zudem ein oder mehrere Hilfs- und Zusatzstoffe, beträgt vorzugsweise 0,1 bis 40 Gew.-%, besonders bevorzugt 0,5 bis 30 Gew.-% und insbesondere bevorzugt 1 bis 20 Gew.-%. Diese Mengenangaben sind auf das Gesamtgewicht der driftreduzierenden Zusammensetzungen enthaltend ein oder mehrere Pestizide und vorzugsweise ein oder mehrere wasserlösliche Pestizide bezogen.

Weiterhin beträgt der Anteil des einen oder der mehreren Pestizide in den driftreduzierenden Zusammensetzungen enthaltend ein oder mehrere Pestizide, vorzugsweise ein oder mehrere wasserlösliche Pestizide, und besonders bevorzugt in solchen, enthaltend zudem ein oder mehrere Hilfs- und Zusatzstoffe, vorzugsweise 0,1 bis 75 Gew.-%, besonders bevorzugt 5 bis 60 Gew.-% und insbesondere bevorzugt 10 bis 50 Gew.-%. Diese Mengenangaben sind auf das Gesamtgewicht der driftreduzierenden Zusammensetzungen enthaltend ein oder mehrere Pestizide und vorzugsweise ein oder mehrere wasserlösliche Pestizide bezogen.

In den driftreduzierenden Zusammensetzungen enthaltend ein oder mehrere Pestizide, vorzugsweise ein oder mehrere wasserlösliche Pestizide, und ein oder mehrere Hilfs- und Zusatzstoffe beträgt
- der Anteil des einen oder der mehreren Copolymere der Komponente A) vorzugsweise 0,1 bis 40 Gew.-%, besonders bevorzugt 0,5 bis 30 Gew.-% und insbesondere bevorzugt 1 bis 25 Gew.-%,
- der Anteil des einen oder der mehreren Pestizide, vorzugsweise des einen oder der mehreren wasserlöslichen Pestizide, vorzugsweise 0,1 bis 75 Gew.-%, besonders bevorzugt 5 bis 60 Gew.-% und insbesondere bevorzugt 10 bis 50 Gew.-% und
- der Anteil der einen oder der mehreren Hilfs- und Zusatzstoffe vorzugsweise 0,1 bis 30 Gew.-%, besonders bevorzugt 0,5 bis 25 Gew.-% und insbesondere bevorzugt 1 bis 20 Gew.-%.
Diese Mengenangaben sind auf das Gesamtgewicht der driftreduzierenden Zusammensetzungen enthaltend ein oder mehrere Pestizide, und vorzugsweise ein oder mehrere wasserlösliche Pestizide, bezogen.

In einer hierunter wiederum bevorzugten Ausführungsform der Erfindung beträgt der Anteil von Wasser in den soeben genannten driftreduzierenden Zusammensetzungen enthaltend ein oder mehrere Pestizide und ein oder mehrere Hilfs- und Zusatzstoffe 2 bis 98,9 Gew.-%, vorzugsweise 3 bis 90 Gew.-% und besonders bevorzugt 5 bis 80 Gew.-%.

In einer weiteren hierunter wiederum bevorzugten Ausführungsform der Erfindung beträgt der Anteil von Wasser in den soeben genannten driftreduzierenden Zusammensetzungen enthaltend ein oder mehrere Pestizide und ein oder mehrere Hilfs- und Zusatzstoffe 10 bis 98,9 Gew.-%, vorzugsweise 20 bis 90 Gew.-% und besonders bevorzugt 30 bis 80 Gew.-%.

Pestizidzubereitungen werden vorzugsweise in Form von Spritzbrühen auf die Felder ausgebracht. Im Rahmen der vorliegenden Erfindung kann hierbei unterschiedlich vorgegangen werden. Die Spritzbrühen können beispielsweise durch Verdünnung von Konzentrat-Formulierungen, insbesondere von driftreduzierenden Zusammensetzungen enthaltend ein oder mehrere Pestizide, mit einer definierten Menge Wasser hergestellt werden ("in-can-Methode"). Die Spritzbrühen können aber beispielsweise auch hergestellt werden, indem eine driftreduzierende Zusammensetzung, vorzugsweise eine solche, die noch kein Pestizid enthält, direkt vor dem Aufbringen auf die zu behandelnden Pflanzen oder deren Ort mit zumindest einem oder mehreren Pestiziden und Wasser kombiniert wird ("tank mix Verfahren").

In einer weiteren bevorzugten Ausführungsform der Erfindung enthalten die Spritzbrühen 0,01 bis 10 Gew.-%, bevorzugt 0,02 bis 3 Gew.-% und besonders bevorzugt 0,025 bis 2 Gew.-% des einen oder der mehreren Pestizide, vorzugsweise des einen oder der mehreren wasserlöslichen Pestizide, und 0,001 bis 3 Gew.-%, bevorzugt 0,005 bis 1 Gew.-% und besonders bevorzugt 0,01 bis 0,5 Gew.-% des einen oder der mehreren Copolymere der Komponente A). Die genannten Mengenangaben beziehen sich jeweils auf das Gesamtgewicht der Spritzbrühe.

Bei dem einen oder den mehreren in der Spritzbrühe enthaltenen Pestiziden handelt es sich vorzugsweise um diejenigen Pestizide, die bereits oben im Zusammenhang mit den "driftreduzierenden Zusammensetzungen enthaltend ein oder mehrere Pestizide" beschrieben worden sind.

Die erfindungsgemäße Verwendung findet insbesondere bei der Verwendung von Spritzbrühen enthaltend ein oder mehrere Pestizide zur Kontrolle und/oder zur Bekämpfung von Unkraut, Pilzerkrankungen oder Insektenbefall statt.

Das eine oder die mehreren Copolymere der Komponente A) können in den driftreduzierenden Zusammensetzungen, vorzugsweise den driftreduzierenden Zusammensetzungen enthaltend ein oder mehrere Pestizide, und in den Spritzbrühen enthaltend ein oder mehrere Pestizide, mehrere Zwecke erfüllen. Aufgrund ihrer chemischen Struktur können sie vor allem als Emulgator, Netz- oder Dispergiermittel wirken.

Das eine oder die mehreren Copolymere der Komponente A) können auch zur Erhöhung der biologischen Wirksamkeit des einen oder der mehreren Pestizide beitragen, also als Adjuvantien fungieren. Unter einem Adjuvant versteht man Hilfsstoffe, die die biologische Wirksamkeit der Wirkstoffe erhöhen, ohne selbst eine biologische Wirkung zu zeigen, indem sie beispielsweise die Benetzung, die Retention oder die Aufnahme in die Pflanze oder den Zielorganismus verbessern.

Die Herstellung der driftreduzierenden Zusammensetzungen und der Spritzbrühen ist je nach Formulierungstyp auf verschiedenen Wegen möglich, welche dem Fachmann hinlänglich bekannt sind.

Weiterer Gegenstand der Erfindung ist ein Verfahren zur Verminderung des Drifts bei der Applikation einer Spritzbrühe enthaltend ein oder mehrere Pestizide durch Aufsprühen auf die zu behandelnden Pflanzen oder deren Ort, wobei die Spritzbrühe eine wie oben beschriebene driftreduzierende Zusammensetzung enthält.

Weiterer Gegenstand der Erfindung ist ein Verfahren zur Verminderung des Drifts bei der Applikation einer Spritzbrühe enthaltend ein oder mehrere Pestizide durch Aufsprühen auf die zu behandelnden Pflanzen oder deren Ort, wobei die Spritzbrühe unter Verwendung einer einer wie oben beschriebnen driftreduzierenden Zusammensetzung hergestellt worden ist.

Die in den erfindungsgemäßen Verfahren eingesetzten Spritzbrühen enthalten vorzugsweise 0,01 bis 10 Gew.-%, besonders bevorzugt 0,02 bis 3 Gew.-% und insbesondere bevorzugt 0,025 bis 2 Gew.-% des einen oder der mehreren Pestizide, vorzugsweise des einen oder der mehreren wasserlöslichen Pestizide, und vorzugsweise 0,001 bis 3 Gew.-%, besonders bevorzugt 0,005 bis 1 Gew.-% und insbesondere bevorzugt 0,01 bis 0,5 Gew.-% des einen oder der mehreren Copolymere der Komponente A), jeweils bezogen auf das Gesamtgewicht der Spritzbrühen.
Die für die erfindungsgemäße Verwendung gegebenen bevorzugten Ausführungsformen stellen gleichermaßen bevorzugte Ausführungsformen für die erfindungsgemäßen Verfahren dar.

### Beispiele

Bei den im Folgenden angegebenen Prozentangaben handelt es sich um Gewichtsprozent (Gew.-%) sofern nicht explizit anders angegeben.
Bei den eingesetzten Handelsprodukten handelt es sich um:

| | |
|---|---|
| Genamin® 267 | Aminethoxylat der Firma Clariant |
| Synergen® GA | C₈/C₁₀ Alkyl-N-Methyl Glucamid der Firma Clariant |
| Sterling Blue | Dicamba DGA Herbizidformulierung (480 g/l a.e.) der Firma Winfield |
| DGA | Diglykolamin [2-(2-Aminoethoxy) ethanol] |
| Glyphosat IPA Salz | Isopropylammoniumsalz des Glyphosats |

| | |
|---|---|
| "a.e." bedeutet "acid equivalent" (Säureäquivalent) | |

### Herstellungsbeispiele

### A) Allgemeine Vorschrift zur Herstellung der Copolymere 1 bis 7:

Die Herstellung der Copolymere erfolgt in zwei Schritten, wobei im ersten Schritt Glycerin zum entsprechenden Polyglycerin kondensiert wird, das anschließend mit Monocarbonsäure und Dicarbonsäure zum Copolymer umgesetzt wird.

Herstellung von Polyglycerin (n = 9,7): 2000 g Glycerin und 6,0 g NaOH (50 Gew.-% in Wasser) wurden in einer Rührapparatur mit Stickstoffeinleitung und Wasserauskreiser unter Rühren auf 270 °C erhitzt. Nach 9 Stunden Reaktionszeit und einem Austrag von 444 g Wasser wurde eine Probe genommen und die OH-Zahl bestimmt. Die ermittelte OH-Zahl betrug 891 mg KOH/g. Dies entspricht einem mittleren Kondensationsgrad n von 9,7 Glycerineinheiten.

Herstellung von Polyglycerin (n = 5,0): 2000 g Glycerin und 6,0 g NaOH (50 Gew.-% in Wasser) wurden in einer Rührapparatur mit Stickstoffeinleitung und Wasserauskreiser unter Rühren auf 270 °C erhitzt. Nach 4 Stunden Reaktionszeit und einem Austrag von 226 g Wasser wurde eine Probe genommen und die OH-Zahl bestimmt. Die ermittelte OH-Zahl betrug 1009 mg KOH/g. Dies entspricht einem mittleren Kondensationsgrad n von 5,0 Glycerineinheiten.

Zur Bestimmung der OH-Zahl wird die in DIN 53240 beschriebene Methode verwendet.

Kondensation von Polyglycerin mit Mono- und Dicarbonsäure zum Copolymer: Das Polyglycerin wurde in einen Rührbehälter mit N₂-Durchleitung und Wasserauskreiser gegeben und mit Cocosfettsäure (C_{8/18}) und Phthalsäure versetzt. Anschließend wurde die Reaktionsmischung unter Rühren auf 220 °C erhitzt bis das Copolymer eine Säurezahl von < 1,00 mg KOH/g aufweist (drei bis neun Stunden)

Zur Bestimmung der Säurezahl wird die in DIN EN ISO 2114 beschriebene Methode verwendet.

In Tabelle 1 sind die eingesetzten Absolutmengen für die Monomere zur Herstellung der Copolymere 1 - 7 sowie die Gewichts-prozentuale Zusammensetzung der Copolymere 1 - 7 angegeben.

Die in Tabelle 1 genannten Gewichts-prozentualen Zusammensetzungen der Copolymere 1 - 7 beziehen sich auf die Gesamtmenge der Monomere wie sie zur Herstellung der Copolymere eingesetzt wurden. Sie beziehen sich nicht auf die Endzusammensetzung der Copolymere, die durch Abspaltung von bei der Kondensation freiwerdendem Wasser davon abweicht.

**Tabelle 1 Zusammensetzung der Copolymere**

| Copolymer | Glycerin | n | Phthalsäure | Cocosfettsäure | Anteil Glycerin | Anteil Phthalsäure | Anteil Cocosfettsäure |
|---|---|---|---|---|---|---|---|
| | [g] | | [g] | [g] | [Gew.-%] | [Gew.-%] | [Gew.-%] |
| 1 | 460 | 5,0 | 1,7 | 408 | 52,9 | 0,2 | 46,9 |
| 2 | 460 | 5,0 | 17 | 408 | 52,0 | 1,9 | 46,1 |
| 3 | 218 | 9,7 | 40,4 | 98,8 | 61,0 | 11,3 | 27,7 |
| 4 | 460 | 5,0 | 166 | 204 | 55,4 | 20,0 | 24,6 |
| 5 | 218 | 9,7 | 83 | 98,8 | 54,5 | 20,8 | 24,7 |
| 6 | 460 | 5,0 | 166 | 408 | 44,5 | 16,1 | 39,5 |
| 7 | 460 | 5,0 | 166 | 712 | 34,4 | 12,4 | 53,2 |

| | | | | | | | |
|---|---|---|---|---|---|---|---|
| n: mittlerer Kondensationsgrad des Glycerins | | | | | | | |

### B) Beispiele für driftreduzierende Zusammensetzungen

### Beispiel DZ1:

70 Gew.-% Copolymer 3 werden in 30 Gew.-% Wasser unter Rühren eingetragen. Es entsteht eine klare, braune hoch viskose Lösung.

### Beispiel DZ2:

45 Gew.-% Copolymer 3 und 10 Gew.-% Dipropylenglykol werden unter Rühren in 45 Gew.-% Wasser eingetragen. Es entsteht eine klare, gelbliche Lösung.

### Beispiel DZ3:

45 Gew.-% Copolymer 3, 45 Gew.-% Synergen GA und 5 Gew.-% Propylenglykol werden unter Rühren in 5 Gew.-% Wasser eingetragen. Es entsteht eine klare, gelbliche Lösung.

### Beispiel DZ4:

30 Gew.-% Copolymer 3 und 30 Gew.-% Genamin 267 werden unter Rühren in 40 Gew.-% Wasser eingetragen. Es entsteht eine klare, gelbliche Lösung.

### C) Beispiele für driftreduzierende Zusammensetzungen enthaltend Pestizid

### Beispiel PZ1 - Herstellung einer wässrigen Pestizidzusammensetzung auf Basis von Dicamba

Eine, klare homogene wässrige Zusammensetzung wurde hergestellt durch Mischen von 86 Gew.-% einer wässrigen Lösung, die 480 g/l (a.e.) Dicamba DGA Salz (entspricht ca. 708 g/l des Dicamba-Salzes) enthält und 14 Gew.-% DZ1. Die Zusammensetzung enthält 10 Gew.-% Copolymer 3.
Die Zusammensetzung war bei Temperaturen von -10 °C, 0 °C, 25 °C und 50 °C für mindestens drei Monate lagerstabil.

### Beispiel PZ2 - Herstellung einer wässrigen Pestizidzusammensetzung auf Basis von IPA-Glyphosat

Eine, klare homogene wässrige Zusammensetzung wurde durch Mischen von 68,4 Gew.-% einer wässrigen Lösung, die 565 g/l (a.e.) IPA Glyphosat Salz (entspricht ca. 763 g/l des Glyphosat-Salzes) enthält, 14 Gew.-% DZ1 und

15 Gew.-% Genamin 267 hergestellt, die mit Wasser auf 100 Gew.-% aufgefüllt wurde.
Die Zusammensetzung war bei Temperaturen von -10 °C, 0 °C, 25 °C und 50 °C für mindestens drei Monate lagerstabil.

### Beispiel PZ3 - Herstellung einer wässrigen Pestizidzusammensetzung auf Basis von IPA-Glyphosat

Eine klare, homogene wässrige Zusammensetzung wurde durch Mischen von 68,4 Gew.-% einer wässrigen Lösung, die 565 g/l (a.e.) IPA Glyphosat Salz (entspricht ca. 763 g/l des Glyphosat-Salzes) enthält, 14 Gew.-% DZ1 und 15 Gew.-% Synergen GA hergestellt, die mit Wasser auf 100 Gew.-% aufgefüllt wurde.
Die Zusammensetzung war bei Temperaturen von -10 °C, 0 °C, 25 °C und 50 °C für mindestens drei Monate lagerstabil.

### Beispiel PZ4 - Herstellung einer wässrigen Pestizidzusammensetzung auf Basis von Kalium-Glyphosat

Eine klare, homogene wässrige Zusammensetzung wurde durch Mischen von 73,5 Gew.-% einer wässrigen Lösung, die 680 g/l (a.e.) Kalium Glyphosat Salz (entspricht ca. 833 g/l des Glyphosat-Salzes) enthält, 14 Gew.-% DZ1 und 10 Gew.-% Synergen GA hergestellt, die mit Wasser auf 100 Gew.-% aufgefüllt wurde.
Die Zusammensetzung war bei Temperaturen von -10 °C, 0 °C, 25 °C und 50 °C für mindestens drei Monate lagerstabil.

### D) Beispiele für wässrige Spritzbrühen

### Beispiele für Spritzbrühen mit Dicamba

Im Folgenden wird die Zusammensetzung der Spritzbrühen A1 - A6 angegeben.

| Spritzbrühe | Dicamba DGA [g/l] | Copolymer 3 [g/l] |
|---|---|---|
| A1 | 3 | 0 |
| A2 | 3 | 0,1 |
| A3 | 3 | 0,25 |
| A4 | 3 | 0,5 |
| A5 | 3 | 1,0 |
| A6 | 3 | 1,5 |

Diese Spritzbrühen werden durch Mischen von wässrigen SL-Formulierungen, die 480 g/l (a.e.) Dicamba DGA Salz enthält (z. B. Sterling Blue der Firma Winfield), Wasser oder verschiedenen Konzentrationen an driftreduzierender Zusammensetzung DZ1 und Wasser hergestellt.

Die Spritzbrühen können auch aus Pestizidzusammensetzungen, beispielsweise ähnlich dem Beispiel PZ1, durch Verdünnen mit Wasser erhalten werden.

### Beispiele für Spritzbrühen mit IPA Glyphosat

Im Folgenden wird die Zusammensetzung der Spritzbrühen B1 - B6 angegeben.

| Spritzbrühe | IPA Glyphosat [g/l] | Copolymer 3 [g/l] |
|---|---|---|
| B1 | 7 | 0 |
| B2 | 7 | 0,1 |
| B3 | 7 | 0,25 |
| B4 | 7 | 0,5 |
| B5 | 7 | 1,0 |
| B6 | 7 | 1,5 |

Diese Spritzbrühen werden durch Mischen einer wässrigen SL-Formulierung, die 565 g/l (a.e.) IPA Glyphosat Salz enthält, Wasser oder verschiedenen Konzentrationen an driftreduzierender Zusammensetzung DZ1 und Wasser hergestellt.

Im Folgenden wird die Zusammensetzung der Spritzbrühen C1 - C6 angegeben.

| Spritzbrühe | Kalium-Glyphosat [g/l] | Copolymer 3 [g/l] |
|---|---|---|
| C1 | 10 | 0 |
| C2 | 10 | 0,1 |
| C3 | 10 | 0,25 |
| C4 | 10 | 0,5 |
| C5 | 10 | 1,0 |
| C6 | 10 | 1,5 |

Diese Spritzbrühen werden durch Mischen einer wässrigen SL-Formulierung, die 680 g/l (a.e.) Kalium Glyphosat Salz enthält, Wasser oder verschiedenen Konzentrationen an driftreduzierender Zusammensetzung DZ1 und Wasser hergestellt.

### E) Anwendungsbeispiele

### Messung der Tropfengrößenverteilung

Ein Malvern Spraytec "real-time spray sizing system" wurde zur Bestimmung der Tropfengrößenverteilung verwendet. Dazu wurde das System (STP5321, Malvern Instruments GmbH, Heidelberg, Germany) in einer eigens konstruierten Spritzkabine montiert mit der Option, praxisübliche Spritzapplikationen bei frei einstellbarem Druck für diverse hydraulische Düsen und frei einstellbaren Abständen (Düse-Zieloberfläche) wählen zu können. Die Spritzkabine ist verdunkelbar und alle Störparameter können ausgeschaltet werden. Für die Messungen wurde die Injektordüse ID12002 (Lechler) mit gröberen Tropfengrößen verwendet. Der eingestellte Druck wurde variiert und ein mittlerer Druck von 3 bar wurde für die nachfolgend berichteten Messungen konstant gehalten. Temperatur und relative Luftfeuchte variierten zwischen 21,5 und 29 °C bzw. 33 % und 56 %. In jeder Versuchsreihe wurde stets Leitungswasser und eine Spritzbrühe mit Pestizid jedoch ohne driftreduzierende Zusammensetzung, als interne Standards gemessen. Die Spraytec Messung wurde bei der Einstellung von 1kHz vorgenommen, nachdem sich Messungen bei 2,5kHz oder höher wie auch andere Einflussgrößen wie zusätzliche Absaugung als vernachlässigbar erwiesen. Die Messung im Sprühnebel wurde konstant gehalten bei einer Position mit Abständen von genau 29,3 cm zur Düse und 0,4 cm vom Lot unter Düse. Die Messungen erfolgten innerhalb von 5 Sekunden und berichtet wird das Mittel von 6 Wiederholungen als Volumenanteil der Tropfen mit Durchmesser < 90 µm ("Vol 90"), < 105 µm ("Vol 105") und < 150 µm ("Vol 150") (prozentualer Standardfehler 0,5 - 2,5 %). Als weiterer Messparameter wurde der Volumenanteil der Tropfen mit Durchmesser < 210 µm bestimmt ("Vol 210") und ins Verhältnis zum Volumenanteil der Tropfen mit Durchmesser < 105 µm gesetzt ("Vol 210 / Vol 105"). Des Weiteren wurde die prozentuale Reduktion des Volumenanteils der Tropfen mit Durchmesser < 105 µm bei Verwendung der driftreduzierenden Zusammensetzungen im Vergleich zur Verwendung der Vergleichszusammensetzungen A1, B1 und C1 errechnet ("Red 105").

### Anwendungsbeispiel 1

Tropfengrößenverteilung Injektordüse (bei 3bar) unter Verwendung der Spritzbrühen A1 - A6.

| Sprühflüssigkeit | Vol 90 [Vol.-%] | Vol 105 [Vol.-%] | Vol 150 [Vol.-%] | Vol 210 / Vol 105 | Düse | Red 105 [%] |
|---|---|---|---|---|---|---|
| Wasser | 2,56 | 3,92 | 8,31 | 3,63 | ID12002 | - |
| A1 (Vergleich) | 3,72 | 5,20 | 9,63 | 3,17 | ID12002 | - |
| A2 (Erfindung) | 1,71 | 2,52 | 4,78 | 3,16 | ID12002 | 52 |
| A3 (Erfindung) | 1,75 | 2,59 | 4,94 | 3,10 | ID12002 | 50 |
| A4 (Erfindung) | 1,59 | 2,36 | 4,47 | 3,10 | ID12002 | 55 |
| A5 (Erfindung) | 1,58 | 2,29 | 4,06 | 2,83 | ID12002 | 56 |
| A6 (Erfindung) | 1,40 | 2,03 | 3,62 | 2,93 | ID12002 | 61 |

### Anwendungsbeispiel 2

Tropfengrößenverteilung Injektordüse (bei 3bar) unter Verwendung der Spritzbrühen B1 - B6.

| Sprühflüssigkeit | Vol 90 [Vol.-%] | Vol 105 [Vol.-%] | Vol 150 [Vol.-%] | Vol 210 / Vol 105 | Düse | Red 105 [%] |
|---|---|---|---|---|---|---|
| Wasser | 2,58 | 3,93 | 8,37 | 3,69 | ID12002 | - |
| B1 (Vergleich) | 2,20 | 3,33 | 6,96 | 3,63 | ID12002 | - |
| B2 (Erfindung) | 1,66 | 2,44 | 4,52 | 3,01 | ID12002 | 27 |
| B3 (Erfindung) | 1,55 | 2,28 | 4,19 | 2,94 | ID12002 | 31 |
| B4 (Erfindung) | 1,44 | 2,09 | 3,69 | 2,82 | ID12002 | 37 |
| B5 (Erfindung) | 1,30 | 1,87 | 3,22 | 2,86 | ID12002 | 44 |
| B6 (Erfindung) | 1,21 | 1,75 | 3,04 | 2,94 | ID12002 | 47 |

### Anwendungsbeispiel 3

Tropfengrößenverteilung Injektordüse (bei 3bar) unter Verwendung der Spritzbrühen C1 - C6.

| Sprühflüssigkeit | Vol 90 [Vol.-%] | Vol 105 [Vol.-%] | Vol 150 [Vol.-%] | Vol 210 / Vol 105 | Düse | Red 105 [%] |
|---|---|---|---|---|---|---|
| Wasser | 2,53 | 3,88 | 8,26 | 3,66 | ID12002 | - |
| C1 (Vergleich) | 2,01 | 3,03 | 6,25 | 3,58 | ID12002 | - |
| C2 (Erfindung) | 1,49 | 2,22 | 4,11 | 2,93 | ID12002 | 27 |
| C3 (Erfindung) | 1,50 | 2,22 | 4,02 | 2,82 | ID12002 | 27 |
| C4 (Erfindung) | 1,43 | 2,10 | 3,70 | 2,75 | ID12002 | 31 |
| C5 (Erfindung) | 1,30 | 1,88 | 3,17 | 2,60 | ID12002 | 38 |
| C6 (Erfindung) | 1,24 | 1,79 | 3,04 | 2,79 | ID12002 | 41 |

## Patentansprüche

1. Verwendung einer Zusammensetzung enthaltend
A) ein oder mehrere Copolymere, wobei die Copolymere eine oder mehrere Struktureinheiten hervorgegangen aus
a) 19,9 bis 75,9 Gew.-% Glycerin
b) 0,1 bis 30 Gew.-% mindestens einer Dicarbonsäure und
c) 24 bis 80 Gew.-% mindestens einer Monocarbonsäure gemäß Formel (I)
R¹-COOH (I)
wobei R¹ (C₅-C₂₉)-Alkyl; (C₇-C₂₉)-Alkenyl; Phenyl oder Naphthyl darstellt, enthalten und
B) Wasser
zur Verminderung des Drifts bei der Applikation einer Spritzbühe enthaltend ein oder mehrere Pestizide.

2. Verwendung gemäß Anspruch 1, **dadurch gekennzeichnet, dass** die Zusammensetzung Wasser in einer Menge größer 1,0 Gew.-%, vorzugsweise größer oder gleich 2 Gew.-%, besonders bevorzugt größer oder gleich 5 Gew.-% und insbesondere bevorzugt größer oder gleich 10 Gew.-%, jeweils bezogen auf das Gesamtgewicht der Zusammensetzung, enthält.

3. Verwendung gemäß Anspruch 1 oder 2, **dadurch gekennzeichnet, dass** es sich bei der mindestens einen Dicarbonsäure b) um Oxalsäure; eine Dicarbonsäure gemäß Formel (II)
HOOC-R²-COOH (II)
und/oder eine Dicarbonsäure gemäß Formel (III) 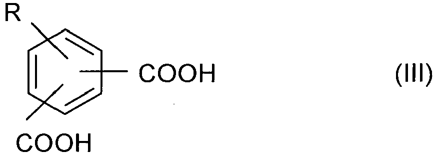 handelt, wobei R² eine (C₁-C₄₀)-Alkylen-Brücke oder eine (C₂-C₂₀)-Alkenylen-Brücke oder eine mono- oder di-hydroxy-substituierte (C₂-C₂₀)-Alkylen-Brücke darstellt und R H, (C₁-C₂₀)-Alkyl, (C₂-C₂₀)-Alkenyl, Phenyl, Benzyl, Halogen, -NO₂, (C₁-C₆)-Alkoxy, -CHO oder -CO((C₁-C₆)-Alkyl) darstellt.

4. Verwendung gemäß einem oder mehreren der Ansprüche 1 bis 3, **dadurch gekennzeichnet, dass** es sich bei der mindestens einen Dicarbonsäure b) um Phthalsäure und bei der mindestens einen Monocarbonsäure c) um eine Cocosfettsäure handelt.

5. Verwendung gemäß einem oder mehreren der Ansprüche 1 bis 4, **dadurch gekennzeichnet, dass** in der Zusammensetzung der Anteil des einen oder der mehreren Copolymere der Komponente A) 1 bis 90 Gew.-%, bevorzugt 10 bis 80 Gew.-% und besonders bevorzugt 20 bis 70 Gew.-% beträgt und der Anteil der Komponente B) vorzugsweise 10 bis 99 Gew.-%, besonders bevorzugt 20 bis 90 Gew.-% und insbesondere bevorzugt 30 bis 80 Gew.-% beträgt.

6. Verwendung gemäß einem oder mehreren der Ansprüche 1 bis 5, **dadurch gekennzeichnet, dass** die Zusammensetzung ein oder mehrere Hilfs- und Zusatzstoffe (Komponente C)) enthält, wobei diese vorzugsweise ausgewählt sind aus der Gruppe bestehend aus Adjuvants, Cosolventien, Emulgatoren, Entschäumern, Harnstoff, Konservierungsmitteln, Lösungsvermittlern, Netzmitteln, Penetrationsförderern, Salzen und Tensiden und besonders bevorzugt ausgewählt sind aus der Gruppe bestehend aus Adjuvants, Cosolventien, Entschäumern, Harnstoff, Konservierungsmitteln, Salzen und Tensiden.

7. Verwendung gemäß einem oder mehreren der Ansprüche 1 bis 6, **dadurch gekennzeichnet, dass** die Zusammensetzung ein oder mehrere Hilfs- und Zusatzstoffe der Komponente C) enthält, und in der Zusammensetzung
- der Anteil des einen oder der mehreren Copolymere der Komponente A) 1 bis 89,9 Gew.-%, bevorzugt 2 bis 60 Gew.-% und besonders bevorzugt 5 bis 50 Gew.-% beträgt,
- der Anteil der Komponente B) 2 bis 98,9 Gew.-%, bevorzugt 3 bis 90 Gew.-% und besonders bevorzugt 5 bis 80 Gew.-% beträgt und
- der Anteil des einen oder der mehreren Hilfs- und Zusatzstoffe der Komponente C) 0,1 bis 70 Gew.-%, bevorzugt 1 bis 60 Gew.-% und besonders bevorzugt 2 bis 50 Gew.-% beträgt,
jeweils bezogen auf das Gesamtgewicht der Zusammensetzung.

8. Verwendung gemäß einem oder mehreren der Ansprüche 1 bis 7, **dadurch gekennzeichnet, dass** die Zusammensetzung ein oder mehrere Pestizide, vorzugsweise ein oder mehrere wasserlösliche Pestizide, enthält.

9. Verwendung gemäß Anspruch 8, **dadurch gekennzeichnet, dass** die Zusammensetzung ein oder mehrere wasserlösliche Pestizide enthält und das eine oder die mehreren wasserlöslichen Pestizide ausgewählt sind aus der Gruppe der wasserlöslichen Herbizide und bevorzugt ausgewählt sind aus der Gruppe bestehend aus den wasserlöslichen Säuren und Salzen, vorzugsweise den wasserlöslichen Salzen, von Acifluorfen, Aminopyralid, Amitrol, Asulam, Benazolin, Bentazon, Bialaphos, Bicyclopyron, Bispyribac, Bromacil, Bromoxynil, Chloramben, Clopyralid, 2,4-D, 2,4-DB, Dicamba, Dichlorprop, Difenzoquat, Diquat, Endothal, Fenoxaprop, Flamprop, Flumiclorac, Fluoroglycofen, Fomesafen, Fosamine, Glufosinat, Glyphosat, Imazameth, Imazamethabenz, Imazamox, Imazapic, Imazapyr, Imazaquin, Imazethapyr, MCPA, MCPB, Mecoprop, Octansäure, Paraquat, Pelargonsäure, Picloram, Quizalofop, 2,3,6-TBA und Triclopyr.

10. Verwendung gemäß Anspruch 9, **dadurch gekennzeichnet, dass** das eine oder die mehreren wasserlöslichen Pestizide ausgewählt sind aus der Gruppe bestehend aus den wasserlöslichen Säuren und Salzen, vorzugsweise den wasserlöslichen Salzen, von Bentazon, 2,4-D, Dicamba, Fomesafen, Glufosinat, Glyphosat, MCPA und Paraquat und bevorzugt ausgewählt sind aus den wasserlöslichen Salzen von Dicamba.

11. Verwendung gemäß einem oder mehreren der Ansprüche 8 bis 10, **dadurch gekennzeichnet, dass** die Zusammensetzung mindestens zwei wasserlösliche Pestizide enthält.

12. Verwendung gemäß Anspruch 11, **dadurch gekennzeichnet, dass** die mindestens zwei wasserlöslichen Pestizide ausgewählt sind aus der Gruppe bestehend aus den wasserlöslichen Säuren und Salzen, vorzugsweise den wasserlöslichen Salzen, von 2,4-D, Dicamba, Fomesafen, Glufosinat und Glyphosat.

13. Verwendung gemäß Anspruch 12, **dadurch gekennzeichnet dass** es sich bei den mindestens zwei wasserlöslichen Pestiziden um die Kombinationen von wasserlöslichen Säuren und/oder Salzen, vorzugsweise von wasserlöslichen Salzen, der zwei Herbizide
a) Glyphosat und 2,4-D oder
b) Glyphosat und Dicamba oder
c) Glyphosat und Fomesafen oder
d) Glyphosat und Glufosinat oder
e) 2,4-D und Dicamba oder
f) Glufosinat und 2,4-D oder
g) Glufosinat und Dicamba handelt.

14. Verwendung gemäß einem oder mehreren der Ansprüche 8 bis 13, **dadurch gekennzeichnet, dass** die Zusammensetzung ein oder mehrere Pestizide, vorzugsweise ein oder mehrere wasserlösliche Pestizide, und ein oder mehrere Safener enthält, und der eine oder die mehreren Safener bevorzugt ausgewählt sind aus der Gruppe bestehend aus Cloquintocet-mexyl, Cyprosulfamid, Isoxafenethyl und Mefenpyr-diethyl.

15. Verwendung gemäß einem oder mehreren der Ansprüche 8 bis 14, **dadurch gekennzeichnet, dass** die Zusammensetzung ein oder mehrere wasserlösliche Pestizide enthält und die Gesamtmenge des einen oder der mehreren wasserlöslichen Pestizide in der Zusammensetzung größer als 100 g/l, bevorzugt größer als 200 g/l, besonders bevorzugt größer als 300 g/l und insbesondere bevorzugt größer als 400 g/l ist, jeweils bezogen auf das Gesamtvolumen der Zusammensetzung.

16. Verwendung gemäß einem oder mehreren der Ansprüche 1 bis 15, **dadurch gekennzeichnet, dass** die Gesamtmenge des einen oder der mehreren Copolymere der Komponente A) in der Zusammensetzung von 10 bis 250 g/l, bevorzugt von 40 bis 200 g/l und besonders bevorzugt von 50 bis 150 g/l ist, jeweils bezogen auf das Gesamtvolumen der Zusammensetzung.

17. Verwendung gemäß einem oder mehreren der Ansprüche 1 bis 16, **dadurch gekennzeichnet, dass** die Zusammensetzung bei einer Temperatur von größer 55 °C, bevorzugt von größer 70 °C und besonders bevorzugt von größer 80 °C, phasenstabil ist.

18. Verwendung gemäß einem oder mehreren der Ansprüche 1 bis 17, **dadurch gekennzeichnet, dass** die Zusammensetzung bei einer Temperatur von kleiner 10 °C, bevorzugt von kleiner 0 °C und besonders bevorzugt von kleiner -10 °C, phasenstabil ist.

19. Verwendung gemäß einem oder mehreren der Ansprüch 1 bis 18, **dadurch gekennzeichnet, dass** die Zusammensetzung ein oder mehrere Pestizide, vorzugsweise ein oder mehrere wasserlösliche Pestizide, und ein oder mehrere Hilfs- und Zusatzstoffe enthält und
- der Anteil des einen oder der mehreren Copolymere der Komponente A) · 0,1 bis 40 Gew.-%, bevorzugt 0,5 bis 30 Gew.-% und besonders bevorzugt 1 bis 25 Gew.-% beträgt,
- der Anteil des einen oder der mehreren Pestizide, vorzugsweise des einen oder der mehreren wasserlöslichen Pestizide, 0,1 bis 75 Gew.-%, bevorzugt 5 bis 60 Gew.-% und besonders bevorzugt 10 bis 50 Gew.-% beträgt und
- der Anteil des einen oder der mehreren Hilfs- und Zusatzstoffe 0,1 bis 30 Gew.-%, bevorzugt 0,5 bis 25 Gew.-% und besonders bevorzugt 1 bis 20 Gew.-% beträgt,
jeweils bezogen auf das Gesamtgewicht der Zusammensetzung.

20. Verwendung gemäß einem oder mehreren der Ansprüche 1 bis 19, **dadurch gekennzeichnet, dass** die Spritzbrühe 0,01 bis 10 Gew.-%, bevorzugt 0,02 bis 3 Gew.-% und besonders bevorzugt 0,025 bis 2 Gew.-% des einen oder der mehreren Pestizide, vorzugsweise des einen oder der mehreren wasserlöslichen Pestizide, und 0,001 bis 3 Gew.-%, bevorzugt 0,005 bis 1 Gew.-% und besonders bevorzugt 0,01 bis 0,5 Gew.-% des einen oder der mehreren Copolymere der Komponente A) enthält, jeweils bezogen auf das Gesamtgewicht der Spritzbrühe.

21. Verfahren zur Verminderung des Drifts bei der Applikation einer Spritzbrühe enthaltend ein oder mehrere Pestizide durch Aufsprühen auf die zu behandelnden Pflanzen oder deren Ort, **dadurch gekennzeichnet, dass** die Spritzbrühe eine Zusammensetzung wie in einem oder mehreren der Ansprüche 1 bis 19 beschrieben enthält.

22. Verfahren zur Verminderung des Drifts bei der Applikation einer Spritzbrühe enthaltend ein oder mehrere Pestizide durch Aufsprühen auf die zu behandelnden Pflanzen oder deren Ort, **dadurch gekennzeichnet, dass** die Spritzbrühe unter Verwendung einer Zusammensetzung wie in einem oder mehreren der Ansprüche 1 bis 19 beschrieben hergestellt worden ist.

23. Verfahren gemäß Anspruch 21 oder 22, **dadurch gekennzeichnet, dass** die Spritzbrühe 0,01 bis 10 Gew.-%, bevorzugt 0,02 bis 3 Gew.-% und besonders bevorzugt 0,025 bis 2 Gew.-% des einen oder der mehreren Pestizide, vorzugsweise des einen oder der mehreren wasserlöslichen Pestizide, und 0,001 bis 3 Gew.-%, bevorzugt 0,005 bis 1 Gew.-% und besonders bevorzugt 0,01 bis 0,5 Gew.-% des einen oder der mehreren Copolymere der Komponente A) enthält, jeweils bezogen auf das Gesamtgewicht der Spritzbrühe.

## Claims

1. Use of a composition comprising
A) one or more copolymers, wherein the copolymers comprise one or more structural units originating from
a) 19.9 to 75.9 wt.% of glycerol
b) 0.1 to 30 wt.% of at least one dicarboxylic acid and
c) 24 to 80 wt.% of at least one monocarboxylic acid according to formula (I)
R'-COOH (I)
wherein R¹ represents (C₅-C₂₉)-alkyl; (C₇-C₂₉)-alkenyl; phenyl or naphthyl, and
B) water
for reducing drift on application of a spray liquor comprising one or more pesticides.

2. Use according to Claim 1, **characterized in that** the composition comprises water in an amount of greater than 1.0 wt.%, preferably greater than or equal to 2 wt.%, particularly preferably greater than or equal to 5 wt.% and especially preferably greater than or equal to 10 wt.%, in each case based on the total weight of the composition.

3. Use according to Claim 1 or 2, **characterized in that** the at least one dicarboxylic acid b) is oxalic acid; a dicarboxylic acid according to formula (II)
HOOC-R²-COOH (II)
and/or a dicarboxylic acid according to formula (III) 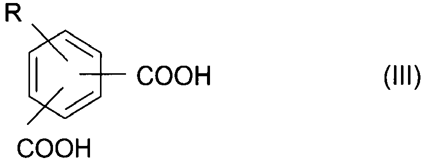 wherein R² represents a (C₁-C₄₀)-alkylene bridge or a (C₂-C₂₀)-alkenylene bridge or a mono- or dihydroxy-substituted (C₂-C₂₀)-alkylene bridge and R represents H, (C₁-C₂₀)-alkyl, (C₂-C₂₀)-alkenyl, phenyl, benzyl, halogen, -NO₂, (C₁-C₆)-alkoxy, - CHO or -CO((C₁-C₆)-alkyl).

4. Use according to one or more of Claims 1 to 3, **characterized in that** the at least one dicarboxylic acid b) is phthalic acid and the at least one monocarboxylic acid c) is a coconut fatty acid.

5. Use according to one or more of Claims 1 to 4, **characterized in that** in the composition the content of the one or more copolymers of component A) is 1 to 90 wt.%, preferably 10 to 80 wt.% and particularly preferably 20 to 70 wt.% and the content of component B) is preferably 10 to 99 wt.%, particularly preferably 20 to 90 wt.% and especially preferably 30 to 80 wt.%.

6. Use according to one or more of Claims 1 to 5, **characterized in that** the composition comprises one or more auxiliary substances and additives (component C), wherein these are preferably selected from the group consisting of adjuvants, cosolvents, emulsifiers, defoamers, urea, preservatives, solubilizing agents, wetting agents, penetration promoters, salts and surfactants, and are particularly preferably selected from the group consisting of adjuvants, cosolvents, defoamers, urea, preservatives, salts and surfactants.

7. Use according to one or more of Claims 1 to 6, **characterized in that** the composition comprises one or more auxiliary substances and additives of component C), and in the composition
- the content of the one or more copolymers of component A) is 1 to 89.9 wt.%, preferably 2 to 60 wt.% and particularly preferably 5 to 50 wt.%,
- the content of component B) is 2 to 98.9 wt.%, preferably 3 to 90 wt.% and particularly preferably 5 to 80 wt.% and
- the content of the one or more auxiliary substances and additives of component C) is 0.1 to 70 wt.%, preferably 1 to 60 wt.% and particularly preferably 2 to 50 wt.%,
in each case based on the total weight of the composition.

8. Use according to one or more of Claims 1 to 7, **characterized in that** the composition comprises one or more pesticides, preferably one or more water-soluble pesticides.

9. Use according to Claim 8, **characterized in that** the composition comprises one or more water-soluble pesticides and the one or more water-soluble pesticides are selected from the group consisting of water-soluble herbicides, and particularly preferably are selected from the group consisting of the water-soluble acids and salts, preferably the water-soluble salts, of acifluorfen, aminopyralid, amitrol, asulam, benazolin, bentazone, bialaphos, bicyclopyrone, bispyribac, bromacil, bromoxynil, chloramben, clopyralid, 2,4-D, 2,4-DB, dicamba, dichlorprop, difenzoquat, diquat, endothal, fenoxaprop, flamprop, flumiclorac, fluoroglycofen, fomesafen, fosamine, glufosinate, glyphosate, imazameth, imazamethabenz, imazamox, imazapic, imazapyr, imazaquin, imazethapyr, MCPA, MCPB, mecoprop, octanoic acid, paraquat, pelargonic acid, picloram, quizalofop, 2,3,6-TBA and triclopyr.

10. Use according to Claim 9, **characterized in that** the one or more water-soluble pesticides are selected from the group consisting of the water-soluble acids and salts, preferably the water-soluble salts, of bentazone, 2,4-D, dicamba, fomesafen, glufosinate, glyphosate, MCPA and paraquat and are preferably selected from the water-soluble salts of dicamba.

11. Use according to one or more of Claims 8 to 10, **characterized in that** the composition comprises at least two water-soluble pesticides.

12. Use according to Claim 11, **characterized in that** the at least two water-soluble pesticides are selected from the group consisting of the water-soluble acids and salts, preferably the water-soluble salts, of 2,4-D, dicamba, fomesafen, glufosinate and glyphosate.

13. Use according to Claim 12, **characterized in that** the at least two water-soluble pesticides are the combinations of water-soluble acids and/or salts, preferably of water-soluble salts, of the two herbicides
a) glyphosate and 2,4-D or
b) glyphosate and dicamba or
c) glyphosate and fomesafen or
d) glyphosate and glufosinate or
e) 2,4-D and dicamba or
f) glufosinate and 2,4-D or
g) glufosinate and dicamba.

14. Use according to one or more of Claims 8 to 13, **characterized in that** the composition comprises one or more pesticides, preferably one or more water-soluble pesticides, and one or more safeners, and the one or more safeners are preferably selected from the group consisting of cloquintocet-mexyl, cyprosulfamide, isoxafenethyl and mefenpyr-diethyl.

15. Use according to one or more of Claims 8 to 14, **characterized in that** the composition comprises one or more water-soluble pesticides and the total amount of the one or more water-soluble pesticides in the composition is greater than 100 g/l, preferably greater than 200 g/l, particularly preferably greater than 300 g/l and especially preferably greater than 400 g/l, in each case based on the total volume of the composition.

16. Use according to one or more of Claims 1 to 15, **characterized in that** the total amount of the one or more copolymers of component A) in the composition is from 10 to 250 g/l, preferably from 40 to 200 g/l and particularly preferably from 50 to 150 g/l, in each case based on the total volume of the composition.

17. Use according to one or more of Claims 1 to 16, **characterized in that** the composition is phase-stable at a temperature of greater than 55 °C, preferably of greater than 70 °C and particularly preferably of greater than 80 °C.

18. Use according to one or more of Claims 1 to 17, **characterized in that** the composition is phase-stable at a temperature of less than 10 °C, preferably of less than 0 °C and particularly preferably of less than -10 °C.

19. Use according to one or more of Claims 1 to 18, **characterized in that** the composition comprises one or more pesticides, preferably one or more water-soluble pesticides, and one or more auxiliary substances and additives and
- the content of the one or more copolymers of component A) is 0.1 to 40 wt.%, preferably 0.5 to 30 wt.% and particularly preferably 1 to 25 wt.%,
- the content of the one or more pesticides, preferably of the one or more water-soluble pesticides, is 0.1 to 75 wt.%, preferably 5 to 60 wt.% and particularly preferably 10 to 50 wt.% and
- the content of the one or more auxiliary substances and additives is 0.1 to 30 wt.%, preferably 0.5 to 25 wt.% and particularly preferably 1 to 20 wt.%,
in each case based on the total weight of the composition.

20. Use according to one or more of Claims 1 to 19, **characterized in that** the spray liquor comprises 0.01 to 10 wt.%, preferably 0.02 to 3 wt.% and particularly preferably 0.025 to 2 wt.% of the one or more pesticides, preferably of the one or more water-soluble pesticides, and 0.001 to 3 wt.%, preferably 0.005 to 1 wt.% and particularly preferably 0.01 to 0.5 wt.% of the one or more copolymers of component A), in each case based on the total weight of the spray liquor.

21. Method for reducing drift on application of a spray liquor comprising one or more pesticides by spraying on to the plants to be treated or the location thereof, **characterized in that** the spray liquor comprises a composition as described in one or more of claims 1 to 19.

22. Method for reducing drift on application of a spray liquor comprising one or more pesticides by spraying on to the plants to be treated or the location thereof, **characterized in that** the spray liquor has been prepared using a composition as described in one or more of claims 1 to 19.

23. Method according to Claim 21 or 22, **characterized in that** the spray liquor comprises 0.01 to 10 wt.%, preferably 0.02 to 3 wt.% and particularly preferably 0.025 to 2 wt.% of the one or more pesticides, preferably of the one or more water-soluble pesticides, and 0.001 to 3 wt.%, preferably 0.005 to 1 wt.% and particularly preferably 0.01 to 0.5 wt.% of the one or more copolymers of component A), in each case based on the total weight of the spray liquor.

## Revendications

1. Utilisation d'une composition contenant :
A) un ou plusieurs copolymères, les copolymères contenant une ou plusieurs unités structurales issues de :
a) 19,9 à 75,9 % en poids de glycérine,
b) 0,1 à 30 % en poids d'au moins un acide dicarboxylique et
c) 24 à 80 % en poids d'au moins un acide monocarboxylique selon la formule (I)
R¹-COOH (I)
dans laquelle R¹ représente alkyle en (C₅-C₂₉), alcényle en (C₇-C₂₉), phényle ou naphtyle, et
B) de l'eau,
pour réduire la dérive lors de l'application d'une bouillie de pulvérisation contenant un ou plusieurs pesticides.

2. Utilisation selon la revendication 1, **caractérisée en ce que** la composition contient de l'eau en une quantité supérieure à 1,0 % en poids, de préférence supérieure ou égale à 2 % en poids, de manière particulièrement préférée supérieure ou égale à 5 % en poids et de manière notamment préférée supérieure ou égale à 10 % en poids, à chaque fois par rapport au poids total de la composition.

3. Utilisation selon la revendication 1 ou 2, **caractérisée en ce que** ledit au moins un acide dicarboxylique b) est l'acide oxalique ; un acide dicarboxylique selon la formule (II)
HOOC-R²-COOH (II)
et/ou un acide dicarboxylique selon la formule (III) 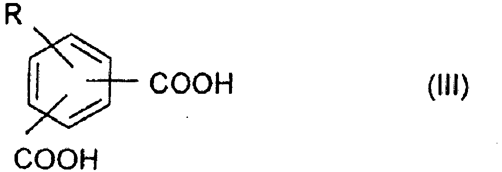 dans lesquelles R² représente un pont alkylène en (C₁-C₄₀) ou un pont alcénylène en (C₂-C₂₀) ou un pont alkylène (C₂-C₂₀) à substitution mono- ou dihydroxy, et R représente H, alkyle en (C₁-C₂₀), alcényle en (C₂-C₂₀), phényle, benzyle, halogène, -NO₂, alcoxy en (C₁-C₆), -CHO ou - CO (alkyle en (C₁-C₆)).

4. Utilisation selon une ou plusieurs des revendications 1 à 3, **caractérisée en ce que** ledit au moins un acide dicarboxylique b) est l'acide phtalique et ledit au moins un acide monocarboxylique c) est un acide gras de coco.

5. Utilisation selon une ou plusieurs des revendications 1 à 4, **caractérisée en ce que** la proportion du ou des copolymères selon le composant A) dans la composition est de 1 à 90 % en poids, de préférence de 10 à 80 % en poids et de manière particulièrement préférée de 20 à 70 % en poids, et la proportion du composant B) est de préférence de 10 à 99 % en poids, de manière particulièrement préférée de 20 à 90 % en poids et de manière notamment préférée de 30 à 80 % en poids.

6. Utilisation selon une ou plusieurs des revendications 1 à 5, **caractérisée en ce que** la composition contient un ou plusieurs adjuvants et additifs (composant C)), ceux-ci étant de préférence choisis dans le groupe constitué par les adjuvants, les co-solvants, les émulsifiants, les antimousses, l'urée, les conservateurs, les solubilisants, les agents mouillants, les promoteurs de pénétration, les sels et les tensioactifs, et de manière particulièrement préférée choisis dans le groupe constitué par les adjuvants, les co-solvants, les antimousses, l'urée, les conservateurs, les sels et les tensioactifs.

7. Utilisation selon une ou plusieurs des revendications 1 à 6, **caractérisée en ce que** la composition contient un ou plusieurs adjuvants et additifs selon le composant C), et, dans la composition,
- la proportion du ou des copolymères selon le composant A) est de 1 à 89,9 % en poids, de préférence de 2 à 60 % en poids et de manière particulièrement préférée de 5 à 50 % en poids,
- la proportion du composant B) est de 2 à 98,9 % en poids, de préférence de 3 à 90 % en poids et de manière particulièrement préférée de 5 à 80 % en poids, et
- la proportion du ou des adjuvants et additifs selon le composant C) est de 0,1 à 70 % en poids, de préférence de 1 à 60 % en poids et de manière particulièrement préférée de 2 à 50 % en poids,
à chaque fois par rapport au poids total de la composition.

8. Utilisation selon une ou plusieurs des revendications 1 à 7, **caractérisée en ce que** la composition contient un ou plusieurs pesticides, de préférence un ou plusieurs pesticides solubles dans l'eau.

9. Utilisation selon la revendication 8, **caractérisée en ce que** la composition contient un ou plusieurs pesticides solubles dans l'eau, et le ou les pesticides solubles dans l'eau sont choisis dans le groupe des herbicides solubles dans l'eau et sont de préférence choisis dans le groupe constitué par les acides et les sels solubles dans l'eau, de préférence les sels solubles dans l'eau, d'acifluorfène, d'aminopyralide, d'amitrol, d'asulam, de bénazoline, de bentazone, de bialaphos, de bicyclopyrone, de bispyribac, de bromacil, de bromoxynil, de chlorambène, de clopyralide, de 2,4-D, de 2,4-DB, de dicamba, de dichlorprop, de difenzoquat, de diquat, d'endothal, de fénoxaprop, de flamprop, de flumiclorac, de fluoroglycofène, de fomésafène, de fosamine, de glufosinate, de glyphosate, d'imazameth, d'imazaméthabenz, d'imazamox, d'imazapic, d'imazapyr, d'imazaquine, d'imazéthapyr, de MCPA, de MCPB, de mécoprop, d'acide octanoïque, de paraquat, d'acide pélargonique, de picloram, de quizalofop, de 2,3,6-TBA et de triclopyr.

10. Utilisation selon la revendication 9, **caractérisée en ce que** le ou les pesticides solubles dans l'eau sont choisis dans le groupe constitué par les acides et les sels solubles dans l'eau, de préférence les sels solubles dans l'eau, de bentazone, de 2,4-D, de dicamba, de fomésafène, de glufosinate, de glyphosate, de MCPA et de paraquat, sont de préférence choisis parmi les sels solubles dans l'eau de dicamba.

11. Utilisation selon une ou plusieurs des revendications 8 à 10, **caractérisée en ce que** la composition contient au moins deux pesticides solubles dans l'eau.

12. Utilisation selon la revendication 11, **caractérisée en ce que** lesdits au moins deux pesticides solubles dans l'eau sont choisis dans le groupe constitué par les acides et les sels solubles dans l'eau, de préférence les sels solubles dans l'eau, de 2,4-D, de dicamba, de fomésafène, de glufosinate et de glyphosate.

13. Utilisation selon la revendication 12, **caractérisée en ce que** lesdits au moins deux pesticides solubles dans l'eau consistent en les combinaisons d'acides et/ou de sels solubles dans l'eau, de préférence de sels solubles dans l'eau, des deux herbicides
a) glyphosate et 2,4-D, ou
b) glyphosate et dicamba, ou
c) glyphosate et fomésafène, ou
d) glyphosate et glufosinate, ou
e) 2,4-D et dicamba, ou
f) glufosinate et 2,4-D, ou
g) glufosinate et dicamba.

14. Utilisation selon une ou plusieurs des revendications 8 à 13, **caractérisée en ce que** la composition contient un ou plusieurs pesticides, de préférence un ou plusieurs pesticides solubles dans l'eau, et un ou plusieurs agents protecteurs, et le ou les agents protecteurs sont de préférence choisis dans le groupe constitué par le cloquintocet-mexyl, le cyprosulfamide, l'isoxafénéthyle et le méfenpyr-diéthyle.

15. Utilisation selon une ou plusieurs des revendications 8 à 14, **caractérisée en ce que** la composition contient un ou plusieurs pesticides solubles dans l'eau, et la quantité totale du ou des pesticides solubles dans l'eau dans la composition est supérieure à 100 g/l, de préférence supérieure à 200 g/l, de manière particulièrement préférée supérieure à 300 g/l, et de manière notamment préférée supérieure à 400 g/l, à chaque fois par rapport au volume total de la composition.

16. Utilisation selon une ou plusieurs des revendications 1 à 15, **caractérisée en ce que** la quantité totale du ou des copolymères selon le composant A) dans la composition est de 10 à 250 g/l, de préférence de 40 à 200 g/l et de manière particulièrement préférée de 50 à 150 g/l, à chaque fois par rapport au volume total de la composition.

17. Utilisation selon une ou plusieurs des revendications 1 à 16, **caractérisée en ce que** la composition présente une stabilité de phases à une température supérieure à 55 °C, de préférence supérieure à 70 °C et de manière particulièrement préférée supérieure à 80 °C.

18. Utilisation selon une ou plusieurs des revendications 1 à 17, **caractérisée en ce que** la composition présente une stabilité de phases à une température inférieure à 10 °C, de préférence inférieure à 0 °C et de manière particulièrement préférée inférieure à -10 °C.

19. Utilisation selon une ou plusieurs des revendications 1 à 18, **caractérisée en ce que** la composition contient un ou plusieurs pesticides, de préférence un ou plusieurs pesticides solubles dans l'eau, et un ou plusieurs adjuvants et additifs, et
- la proportion du ou des copolymères selon le composant A) est de 0,1 à 40 % en poids, de préférence de 0,5 à 30 % en poids et de manière particulièrement préférée de 1 à 25 % en poids,
- la proportion du ou des pesticides, de préférence du ou des pesticides solubles dans l'eau, est de 0,1 à 75 % en poids, de préférence de 5 à 60 % en poids, et de manière particulièrement préférée de 10 à 50 % en poids, et
- la proportion du ou des adjuvants et additifs est de 0,1 à 30 % en poids, de préférence de 0,5 à 25 % en poids et de manière particulièrement préférée de 1 à 20 % en poids,
à chaque fois par rapport au poids total de la composition.

20. Utilisation selon une ou plusieurs des revendications 1 à 19, **caractérisée en ce que** la bouillie de pulvérisation contient 0,01 à 10 % en poids, de préférence 0,02 à 3 % en poids et de manière particulièrement préférée 0,025 à 2 % en poids du ou des pesticides, de préférence du ou des pesticides solubles dans l'eau, et 0,001 à 3 % en poids, de préférence 0,005 à 1 % en poids et de manière particulièrement préférée 0,01 à 0,5 % en poids du ou des copolymères selon le composant A), à chaque fois par rapport au poids total de la bouillie de pulvérisation.

21. Procédé de réduction de la dérive lors de l'application d'une bouillie de pulvérisation contenant un ou plusieurs pesticides par pulvérisation sur les plantes à traiter ou leur emplacement, **caractérisé en ce que** la bouillie de pulvérisation contient une composition telle que décrite dans une ou plusieurs des revendications 1 à 19.

22. Procédé de réduction de la dérive lors de l'application d'une bouillie de pulvérisation contenant un ou plusieurs pesticides par pulvérisation sur les plantes à traiter ou leur emplacement, **caractérisé en ce que** la bouillie de pulvérisation a été fabriquée en utilisant une composition telle que décrite dans une ou plusieurs des revendications 1 à 19.

23. Procédé selon la revendication 21 ou 22, **caractérisé en ce que** la bouillie de pulvérisation contient 0,01 à 10 % en poids, de préférence 0,02 à 3 % en poids et de manière particulièrement préférée 0,025 à 2 % en poids du ou des pesticides, de préférence du ou des pesticides solubles dans l'eau, et 0,001 à 3 % en poids, de préférence 0,005 à 1 % en poids, et de manière particulièrement préférée 0,01 à 0,5 % en poids du ou des copolymères selon le composant A), à chaque fois par rapport au poids total de la bouillie de pulvérisation.
